# EUROPEAN PATENT SPECIFICATION

(11) **EP 3 815 768 B1**
(45) Date of publication and mention of the grant of the patent: **22.11.2023**
(21) Application number: 19866757.8
(22) Date of filing: 27.09.2019
(51) Int. Cl.: B01D 39/20, B01D 39/00, B01D 46/52

(54) **METHOD FOR PRODUCING A FILTER PACK AND METHOD FOR PRODUCING AN AIR FILTER UNIT**
VERFAHREN ZUR HERSTELLUNG EINES FILTERPAKETS UND VERFAHREN ZUR HERSTELLUNG EINES LUFTFILTERELEMENTS
PROCÉDÉ DE FABRICATION D'UN BLOC FILTRANT ET UN PROCÉDÉ DE FABRICATION D'UN ÉLÉMENT FILTRANT D'AIR

(30) Priority: 28.09.2018 JP 2018184327
(43) Date of publication of application: 05.05.2021
(73) Proprietor: DAIKIN INDUSTRIES, LTD., Osaka-Shi, Osaka 530-0001 (JP)
(72) Inventor: KANDA, Toshihiro, Osaka-shi Osaka 530-8323 (JP); KIMURA, Takashi, Osaka-shi, Osaka 530-8323 (JP); MURAKAMI, Chizuru, Osaka-shi, Osaka 530-8323 (JP); HYOUDOU, Takayuki, Osaka-shi, Osaka 530-8323 (JP); NIINUMA, Hitoshi, Osaka-shi, Osaka 530-8323 (JP)
(74) Representative: Hoffmann Eitle
(86) International application number: PCT/JP2019/038294
(87) International publication number: WO 2020/067486

(56) References cited:
- WO-A1-2016/104589
- JP-A- H0 347 511
- JP-A- H09 507 155
- JP-A- H09 507 157
- JP-A- 2000 342 916
- JP-A- 2013 111 572
- JP-A- 2018 051 547
- US-A- 3 432 936
- US-A1- 2007 271 890
- US-A1- 2016 236 132
- US-A1- 2018 154 299

## Description

### TECHNICAL FIELD

The present disclosure relates to a method for producing a filter pack and to a method for producing an air filter unit.

### BACKGROUND ART

Conventionally, glass filter media composed of glass fiber have been used as air filter media for collecting dust floating in the air.

For example, WO 2016/185511 A1 has proposed an air filter medium formed of glass fiber, wherein a separator is inserted into a gap in the air filter medium folded in a zigzag manner to thereby hold a space between opposing portions of the air filter medium.

Further examples of previously known air filter mediums are derivable from US 2016/236132 A1, JP 2013/111572 A, and US 2018/154299 A1.

### SUMMARY OF INVENTION

### <Technical Problem>

In the above air filter medium folded in a zigzag manner, the space between the opposing portions of the air filter medium is secured, but it is necessary to dispose a separator in each gap.

To overcome this, if the space between the opposing portions can be secured, for example, by partially providing a protruding portion in the air filter medium itself, the necessity for the separator can be reduced.

However, in some environments where the air filter medium is used, the protrusion height of the protruding portion may change, thus making it difficult to secure the space between opposing portions of the air filter medium.

The contents of the present disclosure are based on the above-described points, and an object thereof is to provide an air filter medium that can hold, without a separator, a space between portions of the air filter medium in a folded state, a filter pack, an air filter unit, and methods for producing them.

### <Solution to Problem>

The above-mentioned problems are solved by means of a method for producing a filter pack according to claim 1, and/or a method for producing an air filter unit according to claim 7. Distinct embodiments are derivable from the dependent claims.

The present inventors have found that by using an air filter medium that has little strain in a protruding portion, a change in protrusion height of the protruding portion due to the use environment of the air filter medium is reduced, and a space between opposing portions of the air filter medium is readily secured, and further studied to accomplish the present disclosure.

A method for producing a filter pack according to a first aspect includes a step of producing an air filter medium and a step of processing the obtained air filter medium into a zigzag shape by alternately repeating mountain folding and valley folding such that a protruding portion holds a space between portions of the air filter medium opposing each other.

Producing the air filter medium includes a first step of preparing a sheet including a glass fiber, wherein the content of the glass fiber in the air filter medium is between 30 wt% or more and 99 wt% or less, and having a protruding portion in an undried liquid-containing state, and a subsequent step of reducing a liquid content of the sheet having the protruding portion.

Preparing the sheet is achieved by a method in which:
(i) a glass fiber floating in a liquid is processed into paper to obtain a sheet, and a part of the sheet is pressed partially in the thickness direction while being wetted with the liquid, thereby forming a protruding portion; or
(ii) a liquid-permeable plate-shaped member itself used to make a glass fiber floating in a liquid into paper has a shape corresponding to a protruding portion, and the liquid-permeable plate-shaped member is used to make the glass fiber into paper; or
(iii) a protruding portion is formed with a flat glass filter medium that has no irregularities and a liquid content lower than a predetermined amount being dampened with a liquid.

The content of the glass fiber in the air filter medium is not particularly limited, and, for example, may also be 50 wt% or more, or may be 80 wt% or more. The upper limit of the content of the glass fiber in the air filter medium is also not particularly limited, and, for example, may also be 95 wt%.

The sheet including a glass fiber and having a protruding portion in a liquid-containing state may be prepared by any method of the following; a method in which a glass fiber floating in a liquid such as water is made (processed) into paper to obtain a sheet, and a part of the sheet is pressed partially in the thickness direction while being wetted with the liquid such as water, thereby forming a protruding portion; a method in which a liquid-permeable plate-shaped member itself used to make (process) a glass fiber floating in a liquid such as water into paper has a shape corresponding to a protruding portion, and the liquid-permeable plate-shaped member is used to make (process) the glass fiber into paper; or a method in which a protruding portion is formed with a flat glass filter medium that has no irregularities and a liquid content lower than a predetermined amount being dampened with a liquid such as water.

The step of reducing a liquid content is not particularly limited as long as the liquid content of the protruding portion is reduced below the liquid-containing state, and may be a forced drying treatment using a hot-air dryer or the like or may be natural drying (mere standing) without such a forced drying treatment.

The air filter medium obtained by this method for producing a filter pack can suppress strain in the protruding portion. Thus, the air filter medium, even when used in a high-temperature environment in a folded state, reduces the change in protrusion height of the protruding portion of the air filter medium, and thus allows the space between opposing portions of the air filter medium to be secured.

The method for producing a filter pack according to a second aspect is the method for producing a filter pack according to the first aspect, wherein the sheet having a protruding portion in a liquid-containing state contains a liquid in an amount of 20 wt% or more.

Examples of the liquid contained in the sheet having a protruding portion in a liquid-containing state include, but are not limited to, water, liquids having boiling points of 85°C or lower and containing mainly polar molecules, and mixtures thereof. The sheet having a protruding portion in a liquid-containing state preferably contains water in an amount of 20 wt% or more. Preferably, water in an amount of 25 wt% or more of the weight of the sheet before incorporation of the liquid is incorporated into the sheet. More preferably, water in an amount of 30 wt% or more of the weight of the sheet before incorporation of the liquid is incorporated into the sheet. Water in an amount equal to or larger than (100 wt% or more) the weight of the sheet before incorporation of the liquid may be incorporated into the sheet. The upper limit of the amount of water incorporated into the sheet is not particularly limited, and, for example, to suppress embrittlement of the sheet to enhance handling, the upper limit is preferably 1000 wt% or less of the weight of the sheet before incorporation of the liquid, and may be 500 wt% or less.

In this method for producing a filter pack, the sheet having a protruding portion in a liquid-containing state before the step of reducing a liquid content contains a liquid in an amount of 20 wt% or more. This can provide a filter pack in which strain in the protruding portion after the step of reducing a liquid content is suppressed.

The method for producing a filter pack according to a third aspect is the method for producing a filter pack according to the first aspect or the second aspect, wherein the sheet is prepared by forming, on the sheet in a liquid-containing state, the protruding portion having a protrusion height equal to or larger than a thickness of the sheet in a liquid-containing state.

This method for producing a filter pack can suppress, even when a protruding portion having a sufficient protrusion height is formed, a reduction in protrusion height of the protruding portion.

The method for producing a filter pack according to a fourth aspect is the method for producing a filter pack according to the third aspect, wherein the protruding portion is formed on the sheet in a liquid-containing state in which a solids content of a binder is 10 wt% or less, and then the binder is applied to the protruding portion.

This method for producing a filter pack makes it possible to increase the strength of the protruding portion of a resulting air filter medium while suppressing residual stress in the protruding portion due to excessive binding of the glass fiber during the formation of the protruding portion and suppressing damage received during the formation of the protruding portion.

A method for producing a filter pack according to a fifth aspect is the method for producing a filter pack according to any one of the first aspect to the third aspect, wherein the protruding portion is formed on the sheet in a liquid-containing state containing a binder.

This method for producing a filter pack can suppress the occurrence of breakage at the protruding portion and the periphery thereof in forming the protruding portion.

A method for producing a filter pack according to a sixth aspect is the method for producing a filter pack according to the fourth aspect or the fifth aspect and includes a step of volatilizing the binder.

This method for producing a filter pack provides a filter pack in which the amount of the binder is reduced, and thus even when the air filter medium is used in a high-temperature environment, malfunctions due to changes, such as degeneration and decomposition, of the binder can be suppressed.

A method for producing an air filter unit according to a seventh aspect includes a step of holding a filter pack obtained by the method for producing a filter pack according to any one of the first aspect to the sixth aspect in a frame body.

### BRIEF DESCRIPTION OF DRAWINGS

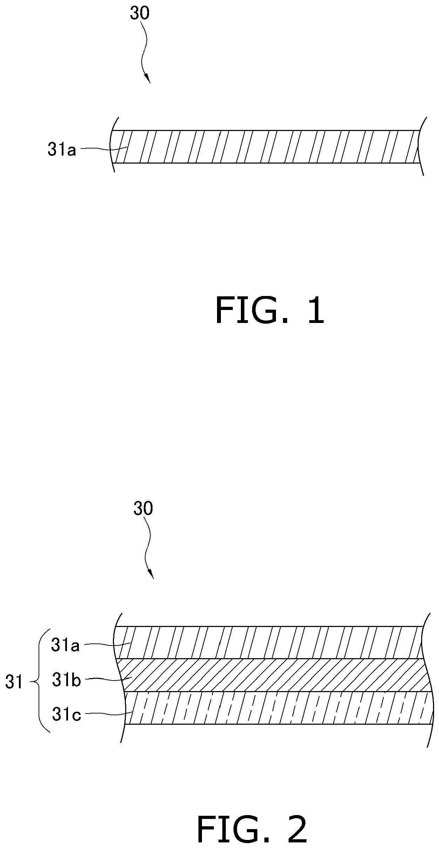

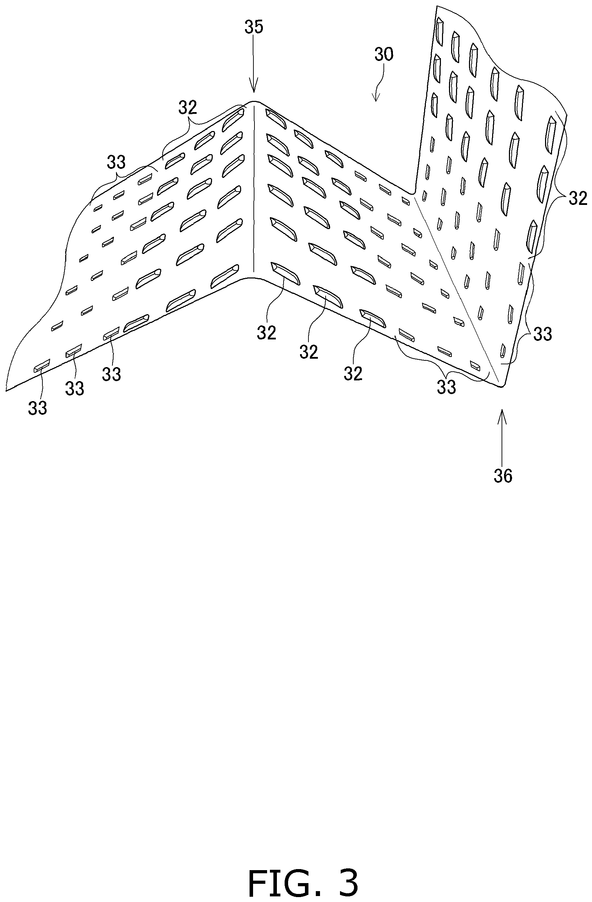

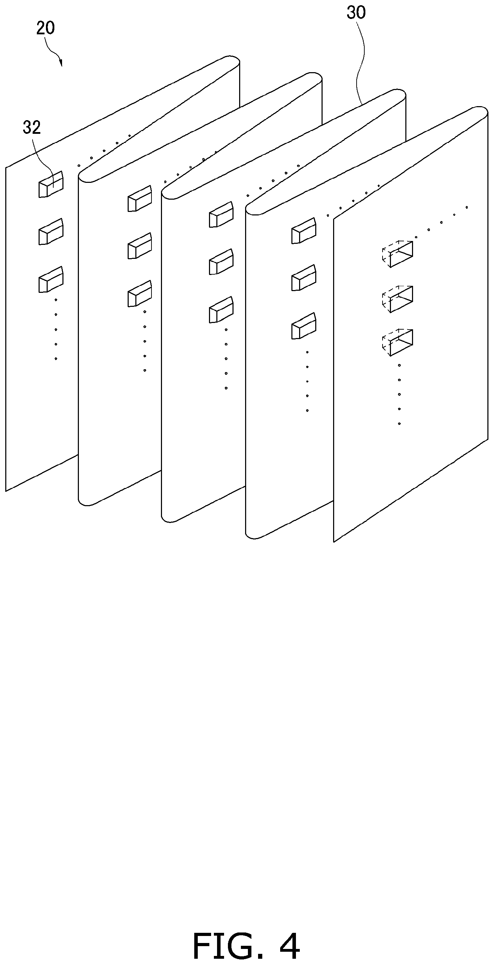

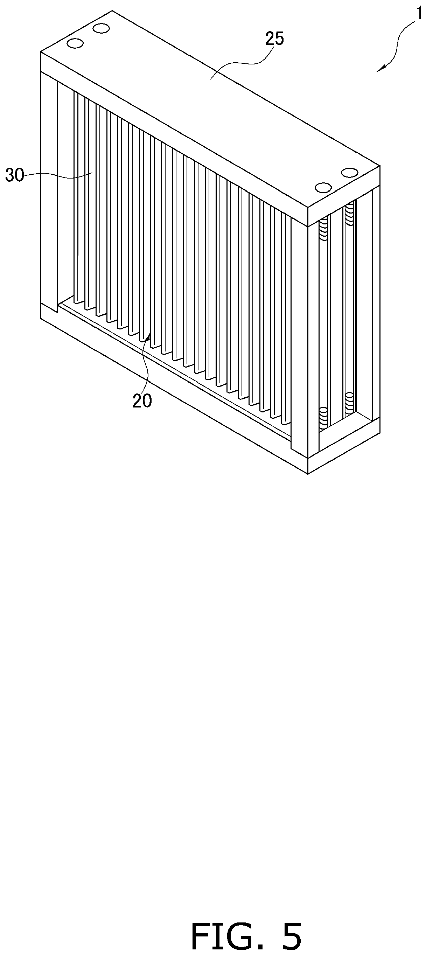

<Fig. 1> Fig. 1 is a schematic sectional view illustrating an air filter medium composed only of a glass filter medium layer.
<Fig. 2> Fig. 2 is a schematic sectional view illustrating a layer configuration of an air filter medium composed of a plurality of layers including a glass filter medium layer.
<Fig. 3> Fig. 3 is a schematic perspective view illustrating protruding portions provided in an air filter medium.
<Fig. 4> Fig. 4 is an external perspective view of a filter pack.
<Fig. 5> Fig. 5 is an external perspective view of an air filter unit.

### DESCRIPTION OF EMBODIMENTS

An air filter medium (hereinafter also referred to simply as a filter medium), a filter pack, an air filter unit, and methods for producing them will now be described with reference to embodiments.

### (1) Air filter medium

The air filter medium is not particularly limited, and, for example, may be composed only of a glass filter medium layer 31a mainly including a glass fiber, like an air filter medium 30 illustrated in Fig. 1, or may be composed such that a plurality of layers including a glass filter medium layer 31a are stacked on top of each other, like an air filter medium 30 illustrated in Fig. 2. Examples of layers used together with the glass filter medium layer 31a as a stack include a porous film 31b and an air-permeable support layer 31c. The porous film 31b and the air-permeable support layer 31c are not particularly limited, and may be disposed on the upstream side or the downstream side of airflow with respect to the glass filter medium layer 31a. The porous film 31b may be a known porous fluororesin film. Examples of the air-permeable support layer 31c include nonwoven fabrics, such as spun-bonded nonwoven fabrics made of polyolefins (e.g., PE and PP), polyamides, polyesters (e.g., PET), and aromatic polyamides, woven fabrics, metal meshes, and resin nets.

The air filter medium is preferably used in a state where the air filter medium is processed into a zigzag shape in which mountain folds and valley folds are alternately repeated and where a protruding portion of the air filter medium holds a space between portions of the air filter medium opposing each other. Here, to hold the space between portions of the air filter medium opposing each other, the protruding portions may abut against each other, or the protruding portion and an opposing flat portion excluding the protruding portion may abut against each other. Although not particularly limited, for example, when the air filter medium is used, like an air filter medium 30 illustrated in Fig. 3, while being mountain-folded at a mountain-folded portion 35 located on the upstream side of airflow and valley-folded at a valley-folded portion 36 located on the downstream side of airflow, the air filter medium may include a plurality of primary-side protruding portions 32 and a plurality of secondary-side protruding portions 33. The primary-side protruding portions 32 are protruded to hold a space between portions opposing each other on the upstream side of an air filter pack or an air filter unit, that is, the primary side of airflow in the air filter medium. The secondary-side protruding portions 33 are protruded to hold a space between portions opposing each other on the downstream side of an air filter pack or an air filter unit, that is, the secondary side of airflow in the air filter medium.

The air filter medium may be used in an environment where the atmospheric temperature can be 100°C or higher, may be used in an environment where the atmospheric temperature can be 200°C or higher, may be used in an environment where the atmospheric temperature can be 300°C or higher, or may be used in an environment where the atmospheric temperature can be 350°C or higher. Although not particularly limited, the air filter medium is preferably used in an environment at 500°C or lower.

The glass filter medium layer includes a glass fiber and has a protruding portion that undergoes a change in protrusion height of 70% or less when left to stand at an atmospheric temperature of 100°C for one hour.

The content of the glass fiber in the glass filter medium layer may be 50 wt% or more, may be 80 wt% or more, may be 90 wt% or more, or may be 95 wt% or more. This allows the glass fiber, which contributes to collection of dust, to be contained in a large amount. The content of the glass fiber in the glass filter medium layer may be 99 wt% or less, may be 97 wt% or less, or may be 95 wt% or less. The glass filter medium layer may include, as a fiber other than the glass fiber, a natural fiber or an organic synthetic fiber, provided that the weight percentage thereof preferably does not exceed that of the glass fiber.

The above glass fiber preferably, but not necessarily, has an average fiber diameter of, for example, 0.1 µm or more and 10.0 µm or less, and may have an average fiber diameter of 0.3 µm or more and 7.0 µm or less. Examples of such a glass fiber include E-glass manufactured by Johns-Manville Corporation and chopped glass. The glass filter medium layer may include only a glass fiber having a single average fiber diameter or may include glass fibers having different average fiber diameters.

The average fiber diameter is determined as follows. First, a surface of a test sample is micrographed with a scanning electron microscope (SEM) at a magnification of 1000 to 5000 times. Two orthogonal lines are drawn on one captured image, and the width of an image of a fiber that intersects these lines is measured as a fiber diameter. The number of fibers measured is 200 or more. The fiber diameters thus obtained are plotted on a lognormal scale, with the horizontal axis representing fiber diameter and the vertical axis representing cumulative frequency. A value at a cumulative frequency of 50% is used as an average fiber diameter.

The shape of the protruding portion is not particularly limited, and may be a shape formed by embossing or may be a shape formed by corrugation. The shape as viewed from the side on which the protruding portion protrudes may be, for example, circular, oval, polygonal such as square or rectangular, linear, or curved. The shape of the protruding portion is preferably such that the cross-sectional shape of the protruding portion is a tapered shape.

The protrusion height of the protruding portion refers to a length, in the protruding direction of the protruding portion, from the level of the lowest part of a surface on the side on which the protruding portion protrudes to the level of the tip of the protruding portion.

When a plurality of protruding portions are provided, the average height of the protruding portions is not particularly limited and is, for example, preferably 1.0 mm or more, more preferably 2.5 mm or more, still more preferably 3.0 mm or more. When the thickness of an area where no protruding portions are provided is assumed to be 100%, the average height of the protruding portions is preferably 100% or more, more preferably 250% or more, still more preferably 300% or more. Even in the case of a glass filter medium layer having such a high protruding portion, the degree of reduction in protrusion height of the protruding portion can be reduced by employing the above-described configuration, even under service conditions in a high-temperature environment. When a plurality of protruding portions are provided, the average height of the protruding portions is not particularly limited, and may be, for example, 10.0 mm or less. When the thickness of an area where no protruding portions are provided is assumed to be 100%, the average height of the protruding portions may be 1000% or less.

The glass filter medium layer has a protruding portion that undergoes a change in protrusion height of 70% or less when left to stand at an atmospheric temperature of 100°C for one hour, and may further have a protruding portion that undergoes a change of 70% or more. When a plurality of protruding portions are present, the proportion of a protruding portion that undergoes a change in protrusion height of 70% or less when left to stand at an atmospheric temperature of 100°C for one hour is preferably 50% or more, more preferably 80% or more. The glass filter medium layer more preferably has a protruding portion that undergoes a change in protrusion height of 70% or less when left to stand at an atmospheric temperature of 200°C for one hour, still more preferably has a protruding portion that undergoes a change in protrusion height of 70% or less when left to stand at an atmospheric temperature of 300°C for one hour.

The glass filter medium layer needs not contain a binder, and may contain a binder to suppress scattering of the glass fiber. When the glass filter medium layer contains a binder, the content of the binder in the glass filter medium layer is preferably 10 wt% or less, more preferably 5 wt% or less, and may be 1 wt% or less.

When the binder is made of a thermoplastic resin, if the content of the binder is small, a reduction in protrusion height of the protruding portion of the air filter medium is readily suppressed, the occurrence of defects, such as fuming and coloration, due to degeneration of the binder is readily suppressed, and flame-resistant properties are readily ensured, even when the air filter medium is used in a high-temperature environment. Examples of such a binder include binders such as epoxy resins, acrylic resins, urethane resins, and polyvinyl alcohols.

In addition to the above types of binders, inorganic binders such as phosphates (e.g., aluminum phosphate) can be used. The inorganic binders are advantageous in that the heat resistance of the glass filter medium layer can be increased.

The thickness of the glass filter medium layer is not particularly limited, and may be, for example, 300 µm or more and 3000 µm or less, and is preferably 500 µm or more and 1500 µm or less for better retention of a pleated shape in the case of use in pleated form.

When the air filter medium is composed of a stack of a plurality of layers including the glass filter medium layer, the thickness of the air filter medium may be, for example, but not necessarily, 300 µm or more and 3000 µm or less, and is preferably 500 µm or more and 1500 µm or less from the viewpoint of reduction in pressure loss in the case where the air filter medium is used while being folded into a pleated shape.

The air filter medium composed only of the glass filter medium layer and the air filter medium composed such that a plurality of layers including the glass filter medium layer are stacked on top of each other can be produced, for example, as described below.

First, a step of preparing a sheet including a glass fiber and having a protruding portion in an undried state and a step of drying the sheet having a protruding portion are performed, whereby a glass filter medium layer can be obtained.

The step of preparing a sheet including a glass fiber and having a protruding portion in an undried state is as defined in claim 1 whereby the steps are performed as follows: a fiber, including a glass fiber, and others floating in a liquid such as water are made (processed) into paper to obtain a sheet, and a part of the sheet is pressed partially in the thickness direction while being wetted with the liquid such as water, thereby forming a protruding portion. Alternatively, for example, the step may be performed as follows: a liquid-permeable plate-shaped member itself used to make (process) a fiber, including a glass fiber, and others floating in a liquid such as water into paper has a shape corresponding to a protruding portion, and the liquid-permeable plate-shaped member is used to make (process) the glass fiber and others into paper to form the protruding portion. Alternatively, for example, the step may be performed as follows: a flat dry glass filter medium that has no irregularities is dampened with a liquid such as water, and a part of the sheet is pressed partially in the thickness direction to thereby form a protruding portion.

To suppress breakage at the protruding portion and the periphery thereof, the content of the liquid such as water in the sheet during the formation of the protruding portion is preferably 20 wt% or more, more preferably 30 wt% or more. For the protruding portion to be easily formed, the weight of the liquid such as water in the sheet during the formation of the protruding portion is preferably not more than three times the weight of the filter medium in a dry state.

To suppress breakage at the protruding portion and the periphery thereof, the sheet during the formation of the protruding portion is preferably a sheet having a tensile elongation satisfying the following conditions. Specifically, the tensile elongation of the sheet in the case where water in an amount of 300 parts by weight relative to 100 parts by weight of the sheet in a dry state is contained is preferably 3.0% or more, more preferably 5.0% or more. The tensile elongation of the sheet tends to increase as the water content increases and tends to increase as the length of the glass fiber used increases, and can also be adjusted by whether a binder is applied, by the amount of application, or by varying the viscosity of a binder to be applied.

To suppress breakage at the protruding portion and the periphery thereof, a binder is preferably contained in the sheet during the formation of the protruding portion. For example, when the protruding portion is formed with a dry glass filter medium free of binder being dampened with a liquid such as water, it is preferable to dampen the glass filter medium with the liquid such as water while keeping a binder on the glass filter medium by, for example, spraying the binder. The solids content of the binder in the sheet during the formation of the protruding portion is, for example, preferably 1 wt% or more and 15 wt% or less, more preferably 2 wt% or more and 7 wt% or less. This makes it possible to increase the strength of an embossed protruding portion of a final glass filter medium layer while suppressing residual stress in the protruding portion due to excessive binding of the glass fiber during embossing and suppressing damage to the filter medium during embossing. When a binder whose viscosity varies according to the amount of water content is used, it is preferable to apply an application liquid in which the solids concentration of the binder is 0.1 wt% or more and 3.0 wt% or less, more preferably an application liquid in which the solids concentration of the binder is 0.3 wt% or more and 1.0 wt% or less, to the glass filter medium.

The drying step is not particularly limited as long as the protruding portion becomes drier than the undried state at the time of formation, and may be a forced drying treatment using a hot-air dryer or the like or may be natural drying (mere standing) without such a forced drying treatment.

The glass filter medium layer obtained by this production method can suppress strain in the protruding portion, and thus can reduce the change in protrusion height of the protruding portion even when used in a high-temperature environment in a folded state. Therefore, when an air filter medium composed only of the glass filter medium layer or an air filter medium including a layer other than the glass filter medium layer is used in pleated form, the space between opposing portions can be secured even in a high-temperature environment.

After the above drying step, the glass filter medium layer may be subjected to a heat treatment (heat cleaning treatment) to volatilize the binder remaining in the glass filter medium layer. The heat treatment is not particularly limited and may be performed, for example, as follows: the air filter medium is processed into a filter pack described below, the filter pack is encased in a frame body to obtain an air filter unit, and the air filter unit itself is left to stand in a high-temperature furnace.

The binder may be applied to the sheet on which the protruding portion has been formed by embossing so as to be applied to at least the protruding portion. In this case, the content of the binder in the sheet on which the protruding portion is to be formed by embossing may be 5 wt% or less, may be 1.5 wt% or less, may be 0.7 wt% or less, or may be 0.5 wt% or less, and is preferably 0.1 wt% or more, more preferably 0.2 wt% or more, in terms of the weight percentage relative to the weight of a filter medium in the state of a final filter medium that has been through the drying step and other steps. This makes it possible to increase the strength of the embossed protruding portion of a final glass filter medium layer. The binder to be applied to the protruding portion thus formed by embossing may be, for example, an inorganic binder such as a phosphate (e.g., aluminum phosphate). For higher strength of the embossed protruding portion and better application properties, the inorganic binder is preferably used, for example, in such a manner that the inorganic binder is applied in the form of an aqueous solution in a moisture state with a solids concentration of 1 wt% or more and 20 wt% or less, more preferably 5 wt% or more and 15 wt% or less, and then heated (e.g., in an atmosphere at 400°C or higher or 500°C or higher for one hour) to remove water and further remove hydrates.

By applying the binder to an embossed projecting portion after the embossed projecting portion is formed and using no or a reduced amount of binder in forming the embossed projecting portion, the releasability of a mold or the like having a bump for forming the embossed projecting portion can be improved.

Although not particularly limited, the content of the binder in the glass filter medium layer after the heat treatment may be 10 wt% or less, or may be 5 wt% or less. Thus, by reducing the content of the binder, malfunctions due to changes, such as degeneration and decomposition, of the binder can be suppressed even when the air filter medium is used in a high-temperature environment.

When the air filter medium is composed such that a plurality of layers including the glass filter medium layer are stacked on top of each other, the air filter medium can be obtained, for example, by stacking another layer on the glass filter medium layer obtained as described above.

In the air filter medium as described above, a pressing load N required until the height of the protruding portion formed by embossing is halved is preferably more than 0.3 N, more preferably more than 0.5 N, still more preferably more than 1.1 N. Due to this, even when the air filter medium is used in, for example, pleated form and subjected, under wind pressure, to a force in a direction in which the protrusion height is reduced, a pleat spacing can be appropriately maintained.

For the air filter medium, the ratio of a collection efficiency of a portion including the embossed protruding portion to a collection efficiency of a non-protruding portion not including the embossed protruding portion (collection efficiency of portion including embossed protruding portion/collection efficiency of non-protruding portion) is preferably 99.0% or more, more preferably 99.9% or more. This sufficiently reduces leakage resulting from damage to the filter medium caused by embossing.

### (2) Filter pack

Next, a filter pack according to this embodiment will be described with reference to Fig. 4.

Fig. 4 is an external perspective view of a filter pack 20 according to this embodiment.

The filter pack 20 is a processed filter medium obtained by processing (pleating) the above-described air filter medium into a zigzag shape in which mountain folds and valley folds are alternately repeated. The pleating can be performed, for example, by using a known rotary folding machine. The filter pack obtained by performing the pleating, when viewed from the mountain and valley folding direction, is shaped like letters V arranged one beside the other. The folding width of the filter medium is not particularly limited, and is, for example, 25 mm or more and 280 mm or less. Due to the pleating, the filter pack 20 can increase the folding area of the filter medium when used for an air filter unit, whereby an air filter unit having high collection efficiency can be obtained. Thus, in the folded filter pack, the space between portions opposing each other is secured by the protruding portion of the above-described air filter medium.

In such a filter pack, it is preferred that a hot melt resin or the like for holding a space between opposing portions of an air filter medium be not provided on a surface of the air filter medium and that the opposing portions be secured together only by the above-described protruding portion.

### (3) Air filter unit

Next, an air filter unit 1 will be described with reference to Fig. 5.

Fig. 5 is an external perspective view of the air filter unit 1 according to this embodiment.

The air filter unit 1 includes the filter pack 20 described above and a frame body 25 housing the filter pack 20.

In the air filter unit, a spacing member is preferably not used in order to suppress generation of dust caused by the occurrence of friction due to a difference in the degree of expansion associated with temperature changes and to achieve a lighter unit. By not using a spacing member, damage to the air filter medium can be suppressed. The spacing member here is, for example, a separator used for holding a space between opposing portions of the air filter medium and formed of a member different from the air filter medium.

The frame body 25 is made by, for example, assembling plates of resin, metal, or the like, and a gap between the filter pack 20 and the frame body 25 is preferably sealed with a sealer. The sealer is for preventing leakage between the filter pack 20 and the frame body 25 and is made of, for example, a resin such as an epoxy resin, an acrylic resin, or a urethane resin.

The air filter unit 1 including the filter pack 20 and the frame body 25 may be a mini-pleat air filter unit in which a single filter pack 20 extending in flat-plate form is held so as to be accommodated inside the frame body 25 or may be a V-bank air filter unit or single header air filter unit in which a plurality of filter packs extending in flat-plate form are arranged and held in the frame body.

### EXAMPLES

The contents of the present disclosure will now be described specifically with reference to Examples and Comparative Examples.

### (Example 1)

In a dry state, a sheet including 97 wt% of a glass fiber composed of 45 wt% of ultrafine glass fibers having an average fiber diameter of 0.65 µm, 50 wt% of ultrafine glass fibers having an average fiber diameter of 3.0 µm, and 5 wt% of chopped glass fibers having an average fiber diameter of 6.0 µm and 3 wt% of a binder composed of an acrylic emulsion having a glass transition temperature of 30°C was produced.

Next, the sheet was soaked in water and then dried until the water content reached 30 wt% (a state containing water in an amount of 30 wt% of the weight of the sheet in a dry state).

Thereafter, the sheet in a state containing water in an amount of 30 wt% of the weight of the sheet in a dry state was embossed so as to have a projection height (a height from a flat surface to the top of a protruding portion) of 3 mm by being sandwiched between upper and lower rolls provided with a plurality of hollows and bumps. Furthermore, the embossed sheet was dried again by being left to stand for one hour in an atmospheric temperature environment at 100°C in a high-temperature thermostatic chamber to obtain an embossed air filter medium including 97 wt% of the glass fiber and 3 wt% of the attached binder.

### (Comparative Example 1)

In Comparative Example 1, the same sheet as in Example 1 (the sheet including 97 wt% of a glass fiber composed of 45 wt% of ultrafine glass fibers having an average fiber diameter of 0.65 µm, 50 wt% of ultrafine glass fibers having an average fiber diameter of 3.0 µm, and 5 wt% of chopped glass fibers having an average fiber diameter of 6.0 µm and 3 wt% of a binder composed of an acrylic emulsion having a glass transition temperature of 30°C) was dried to a water content of 0 wt% and embossed so as to have a projection height of 3 mm by being sandwiched between upper and lower rolls provided with a plurality of hollows and bumps. Furthermore, the embossed sheet was dried again by being left to stand for one hour in an atmospheric temperature environment at 100°C in a high-temperature thermostatic chamber to obtain an embossed air filter medium including 97 wt% of the glass fiber and 3 wt% of the attached binder.

### (Example 2)

In a dry state, a sheet including 100 wt% of a glass fiber composed of 45 wt% of ultrafine glass fibers having an average fiber diameter of 0.65 µm and 55 wt% of ultrafine glass fibers having an average fiber diameter of 3.0 µm was produced.

Next, the sheet was soaked in water and then dried until the water content reached the same weight (100 wt%) as the weight of the sheet in a dry state.

Thereafter, the sheet in a state containing water in an amount of 100 wt% of the weight of the sheet in a dry state was embossed so as to have a projection height (a height from a flat surface to the top of a protruding portion) of 3.5 mm by being sandwiched between upper and lower rolls provided with a plurality of hollows and bumps. Furthermore, the embossed sheet was dried again by being left to stand for one hour in an atmospheric temperature environment at 100°C in a high-temperature thermostatic chamber.

Furthermore, a solution of a binder (manufactured by Taki Chemical Co., Ltd.) composed of aluminum phosphate with a solids concentration of 34 wt% was diluted with water to a concentration of 10 wt% and applied into the top of the embossed protruding portion of the sheet obtained by drying. The sheet was left to stand for one hour in an atmospheric temperature environment at 500°C in a high-temperature dryer to remove hydrates, thereby obtaining an embossed air filter medium of Example 2. For the final binder content after drying, the weight of the binder was 1 part by weight based on 99 parts by weight of the sheet in a dry state.

### (Comparative Example 2)

In Comparative Example 2, in a dry state, a sheet including 100 wt% of a glass fiber composed of 45 wt% of ultrafine glass fibers having an average fiber diameter of 0.65 µm and 55 wt% of ultrafine glass fibers having an average fiber diameter of 3.0 µm was produced.

Next, the sheet was soaked in water and then dried until the water content reached the same weight (100 wt%) as the weight of the sheet in a dry state.

Thereafter, the sheet in a state containing water in an amount of 100 wt% of the weight of the sheet in a dry state was embossed so as to have a projection height (a height from a flat surface to the top of a protruding portion) of 3.5 mm by being sandwiched between upper and lower rolls provided with a plurality of hollows and bumps. Furthermore, the embossed sheet was dried again by being left to stand for one hour in an atmospheric temperature environment at 100°C in a high-temperature thermostatic chamber to obtain an embossed air filter medium of Comparative Example 2.

### (Test for confirming protrusion height change without weight)

Each of the air filter media of Example 1 and Comparative Example 1 was folded in zigzag such that fifteen layers overlapped one another, and the height (height before use) of the fifteen layers of the folded filter medium was determined. Here, the length of the folded filter medium in the thickness direction (the length from the bottom of the first layer to the top of the fifteenth layer) was measured at four points without pressing with a weight or the like, and the average value thereof was calculated to determine the height before use of the fifteen layers of the folded filter medium. In the measurement, the top portion of each protruding portion was in contact with a top portion of a protruding portion protruded from a surface on the non-protruded side of an adjacent layer, that is, protruding portions formed on opposing surfaces were in contact with each other at each other's top portion.

Here, a value obtained by subtracting the thickness of the air filter medium × 15 from the height of the fifteen layers before use was divided by 30 (the total number of fifteen concave portions and fifteen convex portions) to determine the average protrusion height before use.

The filter medium folded such that fifteen layers overlapped one another was then left to stand in a high-temperature thermostatic chamber for one hour without applying a load in the overlapping direction using a weight. The height of the fifteen layers of the folded filter medium after being left to stand was measured at four points, and the average value was calculated to determine the height in use of the fifteen layers. The standing in a high-temperature thermostatic chamber for one hour was performed with the atmospheric temperature in the high-temperature thermostatic chamber set to 100°C, 200°C, and 350°C.

A value obtained by subtracting the thickness of the air filter medium × 15 from the height of the fifteen layers in use was divided by 30 (the total number of fifteen concave portions and fifteen convex portions) to determine the average protrusion height in use.

Using the values obtained above, the % value of "(average protrusion height before use - average protrusion height in use)/average protrusion height before use" was calculated.

In Example 1, the % value in the case where the atmospheric temperature in the high-temperature thermostatic chamber was 100°C was 0%, the % value in the case where the atmospheric temperature in the high-temperature thermostatic chamber was 200°C was 0%, and the % value in the case where the atmospheric temperature in the high-temperature thermostatic chamber was 350°C was 0%. In contrast, in Comparative Example 1, the % value in the case where the atmospheric temperature in the high-temperature thermostatic chamber was 100°C was 85%, the % value in the case where the atmospheric temperature in the high-temperature thermostatic chamber was 200°C was 85%, and the % value in the case where the atmospheric temperature in the high-temperature thermostatic chamber was 350°C was 85%.

### (Test for confirming protrusion height change with weight)

Each of the air filter media of Example 1, Comparative Example 1, Example 2, and Comparative Example 2 was evaluated for a change in protrusion height using a weight. Except for the use of the weight, the test was performed in the same manner as the test for confirming a protrusion height change without a weight.

Specifically, each of the air filter media of Example 1, Comparative Example 1, Example 2, and Comparative Example 2 was folded in zigzag such that fifteen layers overlapped one another, and the height under load (height before use) of the fifteen layers of the folded filter medium was determined. Here, the length of the folded filter medium in the thickness direction (the length from the bottom of the first layer to the top of the fifteenth layer) was measured at four points while being pressed with a weight of 2.5 kg such that the direction of loading corresponded to the stacking direction of the fifteen layers, and the average value thereof was calculated to determine the height under load before use of the fifteen layers of the folded filter medium. In the measurement, the top portion of each protruding portion was in contact with a top portion of a protruding portion protruded from a surface on the non-protruded side of an adjacent layer, that is, protruding portions formed on opposing surfaces were in contact with each other at each other's top portion.

Here, a value obtained by subtracting the thickness under load of the air filter medium × 15 from the height under load of the fifteen layers before use was divided by 30 (the total number of fifteen concave portions and fifteen convex portions) to determine the average protrusion height under load before use. Here, the thickness under load of the air filter medium was determined as follows: the same fifteen air filters not subjected to embossing were stacked on top of each other, and the total thickness of the fifteen layers was determined while being pressed with a weight of 2.5 kg (with a load of the weight of 2.5 kg acting on an area of 15 cm × 40 cm) such that the direction of loading corresponded to the stacking direction of the fifteen layers and divided by 15 to determine the thickness under load per layer.

The filter medium folded such that fifteen layers overlapped one another was then left to stand in a high-temperature thermostatic chamber for one hour while being pressed with a weight of 2.5 kg such that the direction of loading corresponded to the stacking direction of the fifteen layers as above. The height of the fifteen layers of the folded filter medium after being left to stand was measured at four points, and the average value was calculated to determine the height under load in use of the fifteen layers. The standing in a high-temperature thermostatic chamber for one hour was performed with the atmospheric temperature in the high-temperature thermostatic chamber set to 100°C, 200°C, and 350°C.

A value obtained by subtracting the thickness under load of the air filter medium × 15 from the height under load of the fifteen layers in use was divided by 30 (the total number of fifteen concave portions and fifteen convex portions) to determine the average protrusion height under load in use.

Using the values obtained above, the % value of "(average protrusion height under load before use - average protrusion height under load in use)/average protrusion height under load before use" was calculated.

In Example 1, the % value in the case where the atmospheric temperature in the high-temperature thermostatic chamber was 100°C was 0%, the % value in the case where the atmospheric temperature in the high-temperature thermostatic chamber was 200°C was 0%, and the % value in the case where the atmospheric temperature in the high-temperature thermostatic chamber was 350°C was 12%. In contrast, in Comparative Example 1, the % value in the case where the atmospheric temperature in the high-temperature thermostatic chamber was 100°C was 100%, the % value in the case where the atmospheric temperature in the high-temperature thermostatic chamber was 200°C was 100%, and the % value in the case where the atmospheric temperature in the high-temperature thermostatic chamber was 350°C was 100%, indicating that the protruding portions substantially disappeared.

It can be seen from above that the air filter medium of Example 1, even when used in a high-temperature environment, can maintain the protrusion height better and is more likely to maintain a pleat spacing in the case of use in pleated form than the air filter medium of Comparative Example 1.

In Example 2, the % value in the case where the atmospheric temperature in the high-temperature thermostatic chamber was 100°C was 0%, the % value in the case where the atmospheric temperature in the high-temperature thermostatic chamber was 200°C was 0%, and the % value in the case where the atmospheric temperature in the high-temperature thermostatic chamber was 350°C was 5%. In contrast, in Comparative Example 2, the % value in the case where the atmospheric temperature in the high-temperature thermostatic chamber was 100°C was 0%, the % value in the case where the atmospheric temperature in the high-temperature thermostatic chamber was 200°C was 0%, and the % value in the case where the atmospheric temperature in the high-temperature thermostatic chamber was 350°C was 5%.

### (Tensile elongation)

Using the sheets in a state immediately before being embossed during the production of the air filter media of Example 1, Comparative Example 1, Example 2, and Comparative Example 2, sheets impregnated with water in an amount of 300 parts by weight relative to 100 parts by weight of the sheets containing no water were each prepared and measured for tensile elongation. The measurement of the tensile elongation was performed in a test environment at 25°C using an Autograph AGS-5KNH manufactured by Shimadzu Corporation under conditions in accordance with JIS P 8113 (2006). For reasons of sample size, the effective test piece size was set to 2.5 cm wide × 10 cm long, and n was set to 3. To set the initial strain rate to 0.11 min⁻¹ in accordance with JIS, the crosshead speed was set to 11 mm/min. For moisture control, a predetermined amount of water was added using an automatic spray #2 manufactured by Maruhachi Industrials type company, and the measurement was performed after the water was allowed to infiltrate for 30 minutes or more.

The tensile elongation of the sheet of Example 1 was 3.5%, the tensile elongation of the sheet of Comparative Example 1 was 1.5%, the tensile elongation of the sheet of Example 2 was 5.5%, and the tensile elongation of the sheet of Comparative Example 2 was 5.5%. These show that a sheet that contains a liquid at the time of embossing has an increased tensile elongation.

### (Load N at which protrusion height of embossed protruding portion is halved)

Each of the air filter media of Example 1, Comparative Example 1, Example 2, and Comparative Example 2 was measured for a load under which the protrusion height of the embossed protruding portion is halved. Specifically, a mechanical force gauge FB10N manufactured by IMADA CO., LTD. was fixed to a manual test stand SVL-1000N manufactured by IMADA CO., LTD., and the stroke was adjusted such that a gauge head (size: Φ 13.3 mm (138.9 mm²)) pressed protrusions butting each other until their height was halved. A maximum load/2 (per protrusion) at this time was measured for five protrusions, and its average value N was calculated.

The protrusion height halving load N of the air filter medium of Example 1 was 1.2 N, the protrusion height halving load N of the air filter medium of Comparative Example 1 was 1.0 N, the protrusion height halving load N of the air filter medium of Example 2 was 2.0 N, and the protrusion height halving load N of the air filter medium of Comparative Example 2 was 0.3 N. It can be seen that in Example 1, as compared to Comparative Example 1 in which a strain remained in the protruding portion, the height of the protruding portion was less easily reduced. It can be seen that in Example 2, since the protruding portion contained a binder, the height of the protruding portion was less easily reduced as compared to Comparative Example 2. This shows that even when the air filter medium is subjected, under wind pressure, to a force in a direction in which the protrusion height is reduced during use, a pleat spacing tends to be maintained more appropriately.

### (Collection efficiency ratio of embossed protruding portion/non-protruding portion)

Each of the air filter media of Example 1, Comparative Example 1, Example 2, and Comparative Example 2 was measured for the ratio of a collection efficiency in a predetermined area (8 cm × 8 cm, including three embossed protruding portions) of a portion including an embossed protruding portion to a collection efficiency in a predetermined area (8 cm × 8 cm) of a non-protruding portion not including an embossed protruding portion (collection efficiency of portion including embossed protruding portion/collection efficiency of non-protruding portion). Specifically, using an Automated Filter Tester 3160 manufactured by TSI, the collection efficiency at a most penetrating particle size (MPPS) was measured in an effective measurement area of 65.01 cm² under the measurement conditions of a penetrating wind speed of 5.3 cm/s.

The collection efficiency ratio of the air filter medium of Example 1 was 99.95%, the collection efficiency ratio of the air filter medium of Comparative Example 1 was 98%, the collection efficiency ratio of the air filter medium of Example 2 was 99.99%, and the collection efficiency ratio of Comparative Example 2 was 99.99%. It is shown that in Comparative Example 1, in which no liquids were contained at the time of embossing, when a protruding portion was formed at the time of embossing, the filter medium was likely to receive damage at the protruding portion to cause leakage.

While the embodiments of the present disclosure have been described above, it would be appreciated that configurations and details can be modified in various ways without departing from the scope of the present disclosure as defined in the appended claims.

### REFERENCE SIGNS LIST

- 1: air filter unit
- 20: filter pack
- 25: frame body
- 30: air filter medium
- 31a: glass filter medium layer
- 31b: porous film
- 31c: air-permeable support layer

## Claims

1. A method for producing a filter pack (20), comprising:
a step of producing an air filter medium (30) based on the following sub-steps:
a first sub-step of preparing a sheet including a glass fiber, wherein the content of the glass fiber in the air filter medium (30) is between 30 wt% or more and 99 wt% or less, and having a protruding portion in an undried liquid-containing state, by a method in which:
(i) a glass fiber floating in a liquid is processed into paper to obtain a sheet, and a part of the sheet is pressed partially in the thickness direction while being wetted with the liquid, thereby forming a protruding portion; or
(ii) a liquid-permeable plate-shaped member itself used to make a glass fiber floating in a liquid into paper has a shape corresponding to a protruding portion, and the liquid-permeable plate-shaped member is used to make the glass fiber into paper; or
(iii)a protruding portion is formed with a flat glass filter medium that has no irregularities and a liquid content lower than a predetermined amount being dampened with a liquid; and
a subsequent sub-step of reducing a liquid content of the sheet having the protruding portion; and
a step of processing the obtained air filter medium (30) into a zigzag shape by alternately repeating mountain folding and valley folding such that the protruding portion holds a space between portions of the air filter medium (30) opposing each other.

2. The method for producing a filter pack (20) according to Claim 1,
wherein the sheet having a protruding portion in a liquid-containing state contains a liquid in an amount of 20 wt% or more.

3. The method for producing a filter pack (20) according to Claim 1 or 2,
wherein the sheet is prepared by forming, on the sheet in a liquid-containing state, the protruding portion having a protrusion height equal to or larger than a thickness of the sheet in a liquid-containing state.

4. The method for producing a filter pack (20) according to Claim 3,
wherein the protruding portion is formed on the sheet in a liquid-containing state in which a solids content of a binder is 10 wt% or less, and then the binder is applied to the protruding portion.

5. The method for producing a filter pack (20) according to any one of Claims 1 to 3,
wherein the protruding portion is formed on the sheet in a liquid-containing state containing a binder.

6. The method for producing a filter pack (20) according to Claim 4 or 5, comprising a step of volatilizing the binder.

7. A method for producing an air filter unit (1), comprising
a step of holding a filter pack (20) obtained by the method for producing a filter pack (20) according to any one of Claims 1 to 6 in a frame body (25).

## Patentansprüche

1. Verfahren zur Herstellung eines Filterpakets (20), umfassend:
einen Schritt des Herstellens eines Luftfiltermediums (30) basierend auf den folgenden Unterschritten:
einem ersten Unterschritt des Herstellens eines Blatts, das Glasfasern einschließt, wobei der Gehalt an Glasfasern in dem Luftfiltermedium (30) zwischen 30 Gew.-% oder mehr und 99 Gew.-% oder weniger beträgt, und das einen vorstehenden Abschnitt in einem nicht getrockneten, flüssigkeitsenthaltenden Zustand aufweist, durch ein Verfahren, bei dem:
(i) eine in einer Flüssigkeit schwimmende Glasfaser zu Papier verarbeitet wird, um ein Blatt zu erhalten, und ein Teil des Blatts während eines Benetzens mit der Flüssigkeit teilweise in der Dickenrichtung gedrückt wird, wodurch ein vorstehender Abschnitt gebildet wird; oder
(ii) ein flüssigkeitsdurchlässiges plattenförmiges Element selbst, das zum Fertigen einer in einer Flüssigkeit schwimmenden Glasfaser zu Papier verwendet wird, eine Form aufweist, die einem vorstehenden Abschnitt entspricht, und das flüssigkeitsdurchlässige plattenförmige Element zur Fertigen der Glasfaser zu Papier verwendet wird; oder
(iii) ein vorstehender Abschnitt mit einem flachen Glasfiltermedium, das keine Unregelmäßigkeiten aufweist, gebildet wird und bei dem das Glasfiltermedium einen unter einer vorbestimmten Menge liegenden Flüssigkeitsgehalt aufweist und mit einer Flüssigkeit befeuchtet wird; und
einen nachfolgenden Unterschritt des Reduzierens eines Flüssigkeitsgehalts des Blatts, das den vorstehenden Abschnitt aufweist; und
einen Schritt des Verarbeitens des erhaltenen Luftfiltermediums (30) in eine Zickzackform durch abwechselndes Wiederholen einer Berg- und Talfaltung, sodass der vorstehende Abschnitt einen Raum zwischen einander gegenüberliegenden Abschnitten des Luftfiltermediums (30) einnimmt.

2. Verfahren zur Herstellung eines Filterpakets (20) nach Anspruch 1,
wobei das Blatt, das einen vorstehenden Abschnitt aufweist, in einem flüssigkeitsenthaltenden Zustand eine Flüssigkeit in einer Menge von 20 Gew.-% oder mehr enthält.

3. Verfahren zur Herstellung eines Filterpakets (20) nach Anspruch 1 oder 2,
wobei das Blatt durch Bilden des vorstehenden Abschnitts, der eine Vorsprungshöhe aufweist, die gleich oder größer als die Dicke des Blatts in einem flüssigkeitsenthaltenden Zustands ist, auf dem Blatt in einem flüssigkeitsenthaltenden Zustand hergestellt wird.

4. Verfahren zur Herstellung eines Filterpakets (20) nach Anspruch 3,
wobei der vorstehende Abschnitt auf dem Blatt in einem flüssigkeitsenthaltenden Zustand, in dem der Feststoffgehalt eines Bindemittels 10 Gew.-% oder weniger beträgt, gebildet wird und dann das Bindemittel auf den vorstehenden Abschnitt aufgetragen wird.

5. Verfahren zur Herstellung eines Filterpakets (20) nach einem der Ansprüche 1 bis 3,
wobei der vorstehende Abschnitt auf dem Blatt in einem flüssigkeitsenthaltenden Zustand, der ein Bindemittel enthält, gebildet wird.

6. Verfahren zur Herstellung eines Filterpakets (20) nach Anspruch 4 oder 5, umfassend einen Schritt des Verflüchtigens des Bindemittels.

7. Verfahren zur Herstellung einer Luftfiltereinheit (1), umfassend
einen Schritt des Haltens eines Filterpakets (20), das durch das Verfahren zur Herstellung eines Filterpakets (20) nach einem der Ansprüche 1 bis 6 erhalten wird, in einem Rahmenkörper (25).

## Revendications

1. Procédé de fabrication d'un bloc filtrant (20), comprenant :
une étape de fabrication d'un milieu (30) de filtre à air basée sur les sous-étapes suivantes :
une première sous-étape consistant à préparer une feuille incluant une fibre de verre, dans lequel la teneur de la fibre de verre dans le milieu (30) de filtre à air se situe entre 30 % en poids ou plus et 99 % en poids ou moins, et présentant une portion saillante dans un état contenant un liquide non séché, par un procédé dans lequel :
(i) une fibre de verre flottant dans un liquide est transformée en papier pour obtenir une feuille, et une partie de la feuille est pressée partiellement dans la direction de l'épaisseur tout en étant mouillée par le liquide, formant ainsi une portion saillante ; ou
(ii) un élément en forme de plaque perméable aux liquides lui-même utilisé pour transformer en papier une fibre de verre flottant dans un liquide présente une forme correspondant à une portion saillante, et l'élément en forme de plaque perméable aux liquides est utilisé pour transformer la fibre de verre en papier ; ou
(iii) une portion saillante est formée avec un milieu de filtre de verre plat qui ne présente pas d'irrégularités et présente une teneur en liquide inférieure à une quantité prédéterminée humidifiée avec un liquide ; et
une sous-étape suivante consistant à réduire une teneur en liquide de la feuille présentant la portion saillante ; et
une étape consistant à transformer le milieu (30) de filtre à air obtenu en une forme de zigzag en répétant en alternance un pliage montagne et un pliage vallée de telle sorte que la portion saillante maintient un espace entre des portions du milieu (30) de filtre à air à l'opposé les unes des autres.

2. Procédé de fabrication d'un bloc filtrant (20) selon la revendication 1,
dans lequel la feuille présentant une portion saillante dans un état contenant un liquide contient un liquide en une quantité de 20 % en poids ou plus.

3. Procédé de fabrication d'un bloc filtrant (20) selon la revendication 1 ou la revendication 2,
dans lequel la feuille est préparée en formant, sur la feuille dans un état contenant un liquide, la portion saillante présentant une hauteur de saillie supérieure ou égale à une épaisseur de la feuille dans un état contenant un liquide.

4. Procédé de fabrication d'un bloc filtrant (20) selon la revendication 3,
dans lequel la portion saillante est formée sur la feuille dans un état contenant un liquide dans lequel une teneur en solides d'un liant est de 10 % en poids ou moins, et ensuite le liant est appliqué à la portion saillante.

5. Procédé de fabrication d'un bloc filtrant (20) selon l'une quelconque des revendications 1 à 3,
dans lequel la portion saillante est formée sur la feuille dans un état contenant un liquide contenant un liant.

6. Procédé de fabrication d'un bloc filtrant (20) selon la revendication 4 ou la revendication 5, comprenant une étape de volatilisation du liant.

7. Procédé de fabrication d'une unité (1) de filtre à air, comprenant
une étape consistant à maintenir un bloc filtrant (20) obtenu par le procédé de fabrication d'un bloc filtrant (20) selon l'une quelconque des revendications 1 à 6 dans un corps (25) de cadre.
